# EUROPÄISCHE PATENTANMELDUNG

(11) **EP 3 608 550 A1**
(43) Veröffentlichungstag der Anmeldung: **12.02.2020**
(21) Anmeldenummer: 19176364.8
(22) Anmeldetag: 24.05.2019
(51) Int. Cl.: F16B 37/04, F16B 39/30

(54) **HAMMERMUTTER UND PROFILELEMENT FÜR EINE HAMMERMUTTER**

(30) Priorität: 09.08.2018 DE 102018119442
(71) Anmelder: Sortimo International GmbH, 86441 Zusmarshausen (DE)
(72) Erfinder: ZIEGELDORF, Stefan, 89344 Aislingen (DE); UNGER, Thomas, 86424 Dinkelscherben (DE)
(74) Vertreter: Charrier Rapp & Liebau

(57) **Zusammenfassung**

Die Erfindung betrifft eine Hammermutter umfassend einen Klemmkörper (2), eine auf dem Klemmkörper (2) angeordnete Schafteinheit (3) sowie eine mit einem Gewinde versehene Bohrung (4), die sich durch die Schafteinheit (3) und den Klemmkörper (2) erstreckt, sowie ein Profilelement (8) zur Aufnahme einer erfindungsgemäßen Hammermutter (1).

Die Erfindung löst die Aufgabe eine Hammermutter bereitzustellen, die ein Einbringen in ein Profilelement bis zu einer vorgegebenen Eindringtiefe ermöglicht, sowie ein dazu entsprechendes Profilelement bereitzustellen, das das Anbringen der Hammermutter an vorgegebenen Positionen ermöglicht dadurch, dass die Schafteinheit (3) der Hammermutter (1) als ein sich in Richtung des Klemmkörpers (2) verjüngender Konus ausgebildet ist sowie ein Profilelement (8) umfassend mindestens eine Öffnung, an die sich eine Hinterschneidung (14) anschließt, in die der Klemmkörper (2) der Hammermutter (1) einbringbar ist, wobei die Hinterschneidung (14) mindestens ein Anschlagelement (16, 16') aufweist, das die Drehung der eingebrachten Hammermutter (1) begrenzt, sowie eine Ausnehmung zur Aufnahme der Schafteinheit (3) der in die Öffnung (10, 10') eingebrachten Hammermutter (1).

## Beschreibung

Die Erfindung betrifft eine Hammermutter nach dem Oberbegriff des Anspruchs 1 sowie ein Profilelement nach dem Oberbegriff des Anspruchs 12.

Hammermuttern zum Befestigen eines Bauteils an einem Profilelement, insbesondere durch das Verschrauben des Bauteils mit der Hammermutter, sind aus dem Stand der Technik, wie beispielsweise aus der DE 298 18 837 U1, bekannt. Die Hammermutter weist dabei einen Klemmkörper, eine Schafteinheit sowie eine mit einem Gewinde versehene Bohrung auf. Die in ein Profilelement eingebrachte Hammermutter wird dabei so verdreht, dass der Klemmkörper in einer Hinterschneidung des Profilelements zum Liegen kommt. Beim Verschrauben verspannt der in die Hinterschneidung eingebrachte Klemmkörper das Bauteil am Profilelement. Die Hammermutter kann dabei an einer beliebigen Position des als Schiene ausgebildeten Profilelements positioniert und fixiert werden.

Die deutsche Patentanmeldung DE 40 31 602 zeigt eine weitere Ausgestaltung einer Hammermutter.

Bei speziellen Anwendungen, beispielsweise zur Fixierung von Bauteilen an einem Fahrzeugboden, werden Profilelemente eingesetzt, deren Tiefe größer ist als die Höhe der einzubringenden Hammermuttern oder deren Unterseite offen ausgestaltet ist. Die Hammermutter kann dadurch zu tief in das Profilelement eingebracht werden oder auf dessen Unterseite aus diesem herausfallen. Ein Verschrauben der Hammermutter mit einem Bauteil ist dadurch erschwert oder nicht mehr möglich. Außerdem kann bei Profilelementen vorgesehen sein, dass die Hammermutter nur an bestimmten auf das Bauteil bzw. dessen für die Fixierung vorgesehenen Befestigungselementen abgestimmten Positionen angebracht werden soll.

Aufgabe der Erfindung ist es eine Hammermutter bereitzustellen, die ein Einbringen in ein Profilelement bis zu einer vorgegebenen Eindringtiefe ermöglicht, sowie ein dazu entsprechendes Profilelement bereitzustellen, das das Anbringen der Hammermutter an vorgegebenen Positionen ermöglicht.

Diese Aufgabe löst die Erfindung durch eine Hammermutter mit den Merkmalen des Anspruchs 1 sowie ein Profilelement für eine Hammermutter mit den Merkmalen des Anspruchs 12. Vorteilhafte Ausgestaltungen und zweckmäßige Weiterbildungen der Erfindung sind in den abhängigen Ansprüchen angegeben.

Eine eingangs genannte Hammermutter umfasst einen Klemmkörper, eine auf dem Klemmkörper angeordnete Schafteinheit sowie eine mit einem Gewinde versehene Bohrung, die sich durch die Schafteinheit und den Klemmkörper erstreckt. Die Hammermutter ist erfindungsgemäß dadurch gekennzeichnet, dass die Schafteinheit als ein sich auf ihrer Außenseite in Richtung des Klemmkörpers verjüngender Konus ausgebildet ist. Der Durchmesser der Schafteinheit am Klemmkörper kann dabei insbesondere der Breite des bevorzugt länglich ausgebildeten Klemmkörpers entsprechen. Durch die als Konus ausgestaltete Schafteinheit kann die Eindringtiefe der Hammermutter in ein Profilelement, in Abhängigkeit von der Ausgestaltung der Öffnung des Profilelements über die die Hammermutter eingebracht wird, sowie der Ausgestaltung des Konus, insbesondere dessen Öffnungswinkels und dem damit verbundenen Durchmesser des Konus in Abhängigkeit vom Abstand der Schafteinheit zum Klemmkörper, festgelegt werden. Ein zu tiefes Eindringen der Hammermutter in das Profilelement oder ein Herausfallen der Hammermutter aus einem unten offenen Profilelement wird dadurch verhindert. Die konusförmige Ausgestaltung der Außenseite der Schafteinheit ermöglicht außerdem ein leichtes Verdrehen der in das Profilelement eingebrachten Hammermutter ohne ein Verkanten der in der Öffnung des Profilelements angeordneten Schafteinheit.

Bevorzugt ist die Hammermutter einstückig ausgebildet. Durch die einstückige Ausgestaltung ist eine hohe Stabilität der Hammermutter gegeben. Dies ist insbesondere für Belastungen, die durch das Verschrauben mit einem an dem Profilelement anzubringenden Bauteil auftreten sowie die belastbare Fixierung des Bauteils erforderlich. Außerdem ist dadurch eine einfache Fertigung der Hammermutter gegeben.

Weiter kann der Klemmkörper durch eine symmetrische Grundfläche G, gebildet aus zwei über zwei Kurvenabschnitte verbundene, parallel zueinander verlaufende Geraden, sowie einer Höhe h gebildet sein. Insbesondere kann die Grundfläche G über die gesamte Höhe des Klemmkörpers unverändert vorliegen. Die Grund- und die Deckfläche des Klemmkörpers sind somit deckungsgleich. Vorteilhaft ist es, wenn die Kurvenabschnitte Kreissegmente sind. Die Grundfläche G des Klemmkörpers ist bevorzugt länglich ausgestaltet. Die Länge des Klemmkörpers ist dabei durch den Abstand der gegenüberliegenden Kurvenabschnitte, insbesondere die Mitten der gegenüberliegenden Kreissegmente, gegeben. Die Breite des Klemmkörpers ist durch den Abstand der zwei parallel zueinander verlaufenden Geraden gegeben. Durch die Ausgestaltung des Klemmkörpers ist ein einfaches Einbringen der Hammermutter in das Profilelement sowie ein einfaches Drehen der Hammermutter in die zur Fixierung eines Bauteils vorgesehene Fixierungsposition in einer Hinterschneidung eines Profilelements möglich. Die beschriebene Ausgestaltung des Klemmkörpers ermöglicht außerdem eine einfache und vorteilhafte Fertigung der Hammermutter.

In einer vorteilhaften Ausgestaltung ist die Schafteinheit mittig auf dem Klemmkörper angeordnet. Der Klemmkörper und die Schafteinheit bilden dadurch eine symmetrische Einheit, die für übliche Profilelemente, deren Hinterschneidung ebenfalls eine symmetrische Ausgestaltung aufweist, geeignet ist. Das Einbringen der Hammermuter in das Profilelement ist dadurch nicht von der (Längs-) Orientierung des Klemmkörpers abhängig. Die Höhe der Schafteinheit kann in einer vorteilhaften Ausgestaltung in etwa der Höhe des Klemmkörpers entsprechen.

In einer weiteren Ausgestaltung kann die Hammermutter einen Übergangsabschnitt aufweisen, der den Klemmkörper und die Schafteinheit verbindet. Der Übergangsabschnitt stellt dabei einen im Verhältnis zu der Höhe der Schafteinheit bzw. der Höhe des Klemmkörpers lediglich schmalen Übergangsbereich zwischen Klemmkörper und Schafteinheit dar. Der Übergangsabschnitt kann dabei eine von der Schafteinheit abweichende Außenfläche aufweisen. Insbesondere kann die Außenfläche dabei durch eine in Richtung der Bohrung weisende Rundung gegeben sein. Der Übergangsabschnitt bietet dabei insbesondere fertigungstechnische Vorteile, wie auch eine hohe Stabilität der Hammermutter.

Bevorzugt weist das Gewinde der Hammermutter eine Hemmung zur Bildung eines überwindbaren Widerstands zum Einschrauben eines Gewindebolzens auf. Die Hemmung ist dabei bevorzugt durch eine Störung mindestens eines Gewindegangs gegeben. Beispielsweise kann dabei der letzte Gewindegang eine Erhebung aufweisen, die in den Gewindegang ragt und so ein weiteres Einschrauben des Gewindebolzens zunächst hemmt. Die Hemmung ermöglicht dabei das ordnungsgemäße und für die Fixierung eines Bauteils erforderliche Verdrehen und Positionieren der Hammermutter in der Hinterschneidung. Bei einer vorgegebenen Orientierung des Klemmkörpers in der Hinterschneidung, die beispielsweise durch ein in der Hinterschneidung angeordnetes Anschlagelement gegeben ist, das ein Weiterdrehen des Klemmkörpers verhindert, wird die Hemmung überwunden und der Gewindebolzen kann weiter eingeschraubt werden.

In einer weiteren vorteilhaften Ausgestaltung weist die Schafteinheit auf der dem Klemmkörper abgewandten Seite mindestens eine Einkerbung auf. Insbesondere sind dabei zwei auf gegenüberliegenden Seiten der Bohrung angeordnete Einkerbungen vorgesehen. Die Einkerbungen ermöglichen dabei, unabhängig von einem in das Gewinde eingeschraubten Gewindebolzen und der Hemmung des Gewindes, ein Verdrehen einer in ein Profilelement eingebrachten Hammermutter, beispielsweise durch einen Schlitzschraubendreher. Dies ist insbesondere für das Ausrichten der Hammermutter in dem Profilelement, insbesondere auch das Ausdrehen der Hammermutter aus der Fixierungsposition, vorteilhaft.

In einer bevorzugten Ausgestaltung weist die als Konus ausgebildete Schafteinheit einen Öffnungswinkel im Bereich von 40° bis 60°, insbesondere von 45° bis 55°, speziell 50° auf. Ein derartiger Öffnungswinkel ist fertigungstechnisch sowie aus Gründen der Stabilität der Schafteinheit vorteilhaft. Insbesondere bietet sich ein derartiger Öffnungswinkel für die Konstruktion eines zur Hammermutter entsprechenden Profilelements, speziell auch zur Festlegung der Position sowie der Eindringtiefe der Hammermutter in das Profilelement, an.

Ein eingangs genanntes Profilelement zur Aufnahme einer erfindungsgemäßen Hammermutter, die eine als Konus ausgebildete Schafteinheit aufweist, umfasst mindestens eine Öffnung, an die sich eine Hinterschneidung anschließt, in die der Klemmkörper der Hammermutter einbringbar ist, wobei die Hinterschneidung mindestens ein Anschlagelement aufweist, das die Drehung der eingebrachten Hammermutter begrenzt, sowie eine Ausnehmung zur Aufnahme der Schafteinheit der in die Öffnung eingebrachten Hammermutter. Die Breite der Öffnung entspricht dabei bevorzugt etwa der Breite des Klemmkörpers und die Länge der Öffnung weist dabei mindestens die Länge des Klemmkörpers auf. Bevorzugt kann die Ausnehmung der Öffnung durch zwei auf den Längsseiten der Öffnung vorgesehene Aussparungen, die Segmenten eines Konus mit einem der Schafteinheit entsprechenden Öffnungswinkel entsprechen, gegeben sein. Die Eindringtiefe der durch die Öffnung des Profilelements eingebrachten Hammermutter wird dabei durch die Ausnehmung und die darin eingebrachte Schafteinheit begrenzt. Durch die Ausnehmung wird außerdem die Position der in das Profilelement einzubringenden Hammermutter vorgegeben. Die Hinterschneidung des Profilelements weist dabei bevorzugt eine Ausgestaltung auf, die eine Drehung der Hammermutter in nur eine Drehrichtung, vorteilhaft in Einschraubrichtung eines Gewindebolzens, ermöglicht. Insbesondere weist die Hinterschneidung dabei ein Begrenzungselement auf, das die Drehung des Klemmkörper, und somit die Drehung der Hammermutter, in die nicht vorgesehene Drehrichtung verhindert. Das Drehen der Hammermutter in die vorgesehene Drehrichtung wird ab einem bestimmten Drehwinkel durch das Anschlagelement der Hinterschneidung begrenzt. Bevorzugt wird die in die Öffnung eingebrachte Hammermutter dabei um einen Drehwinkel von 90° gedreht. Der Klemmkörper kommt dabei in einer zur Befestigung eines Bauteils vorgesehenen Fixierungsposition der Hinterschneidung zum Liegen. In einer besonders vorteilhaften Ausgestaltung weist die Hinterschneidung zusätzlich zu dem Anschlagelement eine Rastnase auf, die ein Zurückdrehen des in der Fixierungsposition angeordneten Klemmkörpers unterbindet. Das Profilelement, insbesondere die Ausnehmung, ist dabei so ausgestaltet, dass die Hammermutter, insbesondere der Klemmkörper, so tief in das Profilelement eingebracht wird, dass eine Drehung des Klemmkörpers in die Fixierungsposition über die Rastnase hinweg möglich ist. Beim Fixieren eines Bauteils wird die Hammermutter gegen die Hinterschneidung gedrückt. Die Eindringtiefe der Hammermutter in das Profilelement wird dadurch verringert. Durch die Rastnase wird dabei ein Zurückdrehen der Hammermutter aus der Fixierungsposition verhindert. Ein Verdrehen einer mit dem Bauteil verschraubten Hammermutter aus der Fixierungsposition, und somit ein Ausbringen der Hammermutter aus der Hinterschneidung, ist dadurch nicht möglich.

Bevorzugt nimmt die Ausnehmung die Schafteinheit dabei vollständig auf. Insbesondere ist die Schafteinheit dabei auch bei einem mit der Hammermutter verschraubten Bauteil innerhalb der Ausnehmung angeordnet. Ein Überstehen oder Hinausragen der Schafteinheit über die Außenseite des Profilelements ist dadurch nicht gegeben. Insbesondere kann die Schafteinheit dabei mit der Außenseite des Profilelements abschließen.

In einer bevorzugten Ausführungsform enthält das Profilelement dabei zwei durch einen Steg voneinander getrennte Öffnungen. Eine derartige Ausgestaltung ermöglicht die Befestigung eines Bauteils am Profilelement über zwei in die Öffnungen eingebrachte Hammermuttern. Außerdem kann dabei, insbesondere bei nicht in die Öffnungen eingebrachten Hammermuttern, ein Haltegurt an dem Steg, speziell ein hakenförmiges Vorderteil des Haltegurts, befestigt werden. Das Profilelement ist dadurch flexibel einsetzbar. Beispielsweise ist bei einer Verwendung des Profilelements in einem Transportfahrzeug, insbesondere durch in den Fahrzeugboden eingelassene Profilelemente, sowohl die Verschraubung eines Bauteils, zum Beispiel eines Regals, über eine Hammermutter, als auch eine Sicherung der Transportgüter über einen Haltegurt möglich. Dabei sind auch Profilelemente mit mehr als zwei Öffnungen, die jeweils durch einen Steg voneinander getrennt sind, denkbar.

Besonderheiten und Vorteile der Erfindung ergeben sich aus der folgenden Beschreibung bevorzugter Ausführungsbeispiele anhand der Zeichnungen. Diese zeigen:
- **Fig. 1**: eine perspektivische Ansicht einer Ausführungsform einer erfindungsgemäßen Hammermutter;
- **Fig. 2**: eine Draufsicht auf die Hammermutter aus Fig. 1;
- **Fig. 3**: eine Seitenansicht der Hammermutter aus Fig. 1;
- **Fig. 4**: eine perspektivische Ansicht eines erfindungsgemäßen Profilelements sowie der Hammermutter aus Fig. 1;
- **Fig. 5**: eine perspektivische Ansicht des Profilelements aus Fig. 4 mit einer in das Profilelement eingebrachten Hammermutter;
- **Fig. 6**: eine Ansicht der Rückseite des Profilelements aus Fig. 4 mit eingebrachter Hammermutter in einer ersten Position;
- **Fig. 7**: eine Ansicht der Rückseite des Profilelements aus Fig. 4 mit eingebrachter Hammermutter in einer zweiten Position.

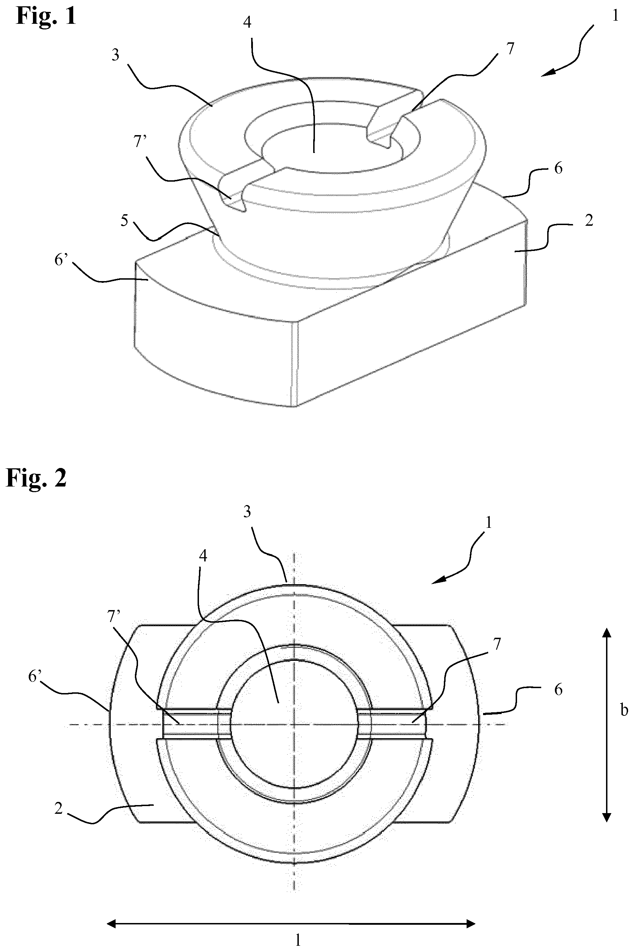

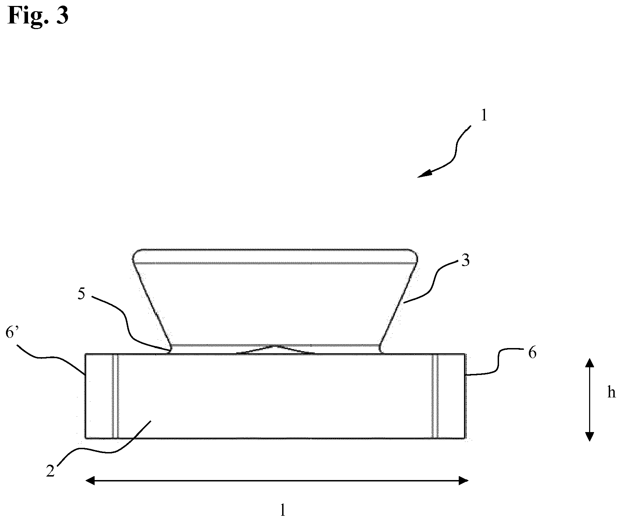

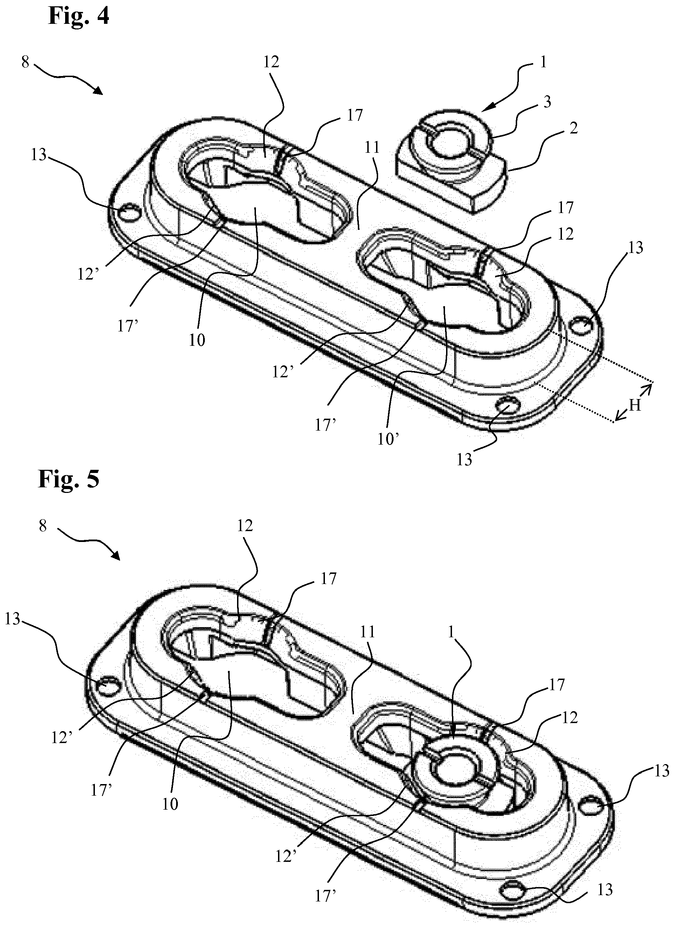

In den Fig. 1 bis 3 ist ein Ausführungsbeispiel einer erfindungsgemäßen Hammermutter 1 und in den Fig. 4 bis 7 ein Ausführungsbeispiel eines erfindungsgemäßen Profilelements 8 dargestellt. Die Hammermutter 1 umfasst dabei einen Klemmkörper 2, eine mittig auf dem Klemmkörper 2 angeordnete Schafteinheit 3 sowie eine mit einem Gewinde, das eine nicht gezeigte Störung eines Gewindegangs aufweist, versehene Bohrung 4. Die Schafteinheit 3 ist dabei als ein sich auf Ihrer Außenseite in Richtung des Klemmkörpers 2 verjüngender Konus ausgebildet. Die Schafteinheit der in den Fig. 1 bis 3 beispielhaft gezeigten Hammermutter weist einen Öffnungswinkel von etwa 50° auf. Zwischen der Schafteinheit 3 und dem Klemmkörper ist dabei ein schmaler Übergangsbereich 5 angeordnet, der eine von der Schafteinheit 2 abweichende Außenkontur in Form einer in Richtung der Bohrung 4 weisenden Rundung aufweist, wie insbesondere in Fig. 3 dargestellt ist. Der Klemmkörper 2 ist dabei durch eine Länge 1, eine Breite b und eine Höhe h gegeben. An seinen Längsseiten ist der Klemmkörper dabei durch zwei Kreissegmente 6, 6' begrenzt. Der Durchmesser der Schafteinheit 2 bzw. die Ausdehnung des Übergangsbereichs 5 entspricht dabei der Breite b des Klemmkörpers 2. Die Schafteinheit 3 weist auf Ihrer Oberseite außerdem zwei Einkerbungen 7, 7' auf, die ein Drehen der in ein Profilelement eingebrachten Hammermutter 1, beispielsweise durch einen Schlitzschraubendreher, ermöglicht.

In einer beispielhaften Ausführungsform kann der Klemmkörper 2 eine Höhe h von etwa 3 bis 10 mm, insbesondere etwa 5 mm, eine Länge 1 von 15 bis 25 mm, insbesondere etwa 19 mm, und eine Breite b von 5 bis 15 mm, insbesondere etwa 10 mm aufweisen. Die Höhe der Schafteinheit 3 kann dabei in etwa der Höhe h des Klemmkörpers 2 entsprechen. Der zwischen Schafteinheit 3 und Klemmkörper 2 angeordnete Übergangsbereich kann dabei eine Höhe von unter 1 mm, insbesondere von unter 0,5 mm aufweisen. Der Öffnungswinkel der Außenseite der konusförmigen Schafteinheit kann dabei zwischen 40° und 60°, bevorzugt zwischen 45 ° und 55°, insbesondere bei 50° liegen. Der Durchmesser der Schafteinheit 2 an seiner Oberseite kann dadurch beispielsweise das 1,5-fache des Durchmessers der Schafteinheit 2 am Klemmkörper 2 bzw. der Breite des Klemmkörpers 2 betragen. Die Bohrung 4 kann dabei beispielsweise mit einem M8-Gewinde versehen sein.

Das in den Fig. 4 bis 7 gezeigte Profilelement 8 ist nach unten offen und weist einen unteren Abschnitt mit einem nach außen hervorstehenden Auflagebereich 9, der der Befestigung des Profilelements 8 an einer Befestigungswand, beispielsweise an einem Fahrzeugboden, dient, sowie einen oberen Abschnitt mit einer Höhe H, der zwei durch einen Steg 11 voneinander getrennten Öffnungen 10, 10' umfasst, wie insbesondere in den Fig. 4 und 5 gezeigt ist, auf. Die Öffnungen 10, 10' weisen dabei jeweils eine Ausnehmung, bestehend aus zwei auf den Längsseiten einer Öffnung 10, 10' angeordneten Aussparungen 12, 12', auf. Die Aussparungen 12, 12' sind dabei durch Segmente eines Konus mit einem der Schafteinheit 3 entsprechenden Öffnungswinkel gegeben.

Der Auflagebereich 9 im unteren Bereich des Profilelements ist mit Bohrungen 13 zur Verschraubung des Profilelements an einer Befestigungswand, insbesondere einem Fahrzeugboden, versehen. Bevorzugt wird das Profilelement 8 dabei von der Rückseite einer Befestigungswand in eine dem oberen Bereich des Profilelements 8 entsprechende Aussparung eingebracht und über die Bohrungen 13 mit der Befestigungswand verschraubt. In einer vorteilhaften Ausgestaltung weist die Befestigungswand dabei eine Dicke auf, die der Höhe H des oberen Abschnitts des Profilelements 8 entspricht, so dass das Profilelement 8 mit der Vorderseite der Befestigungswand, insbesondere mit einem Fahrzeugboden, abschließt.

Fig. 5 zeigt eine in die Ausnehmung des Profilelements 8 eingebrachte Hammermutter 1. Das Eindringen der Hammermutter 1 in das Profilelement 8 wird dabei durch die Ausgestaltung der konusförmigen Schafteinheit 3 sowie den dazu entsprechend ausgestalteten Aussparungen 12, 12' begrenzt.

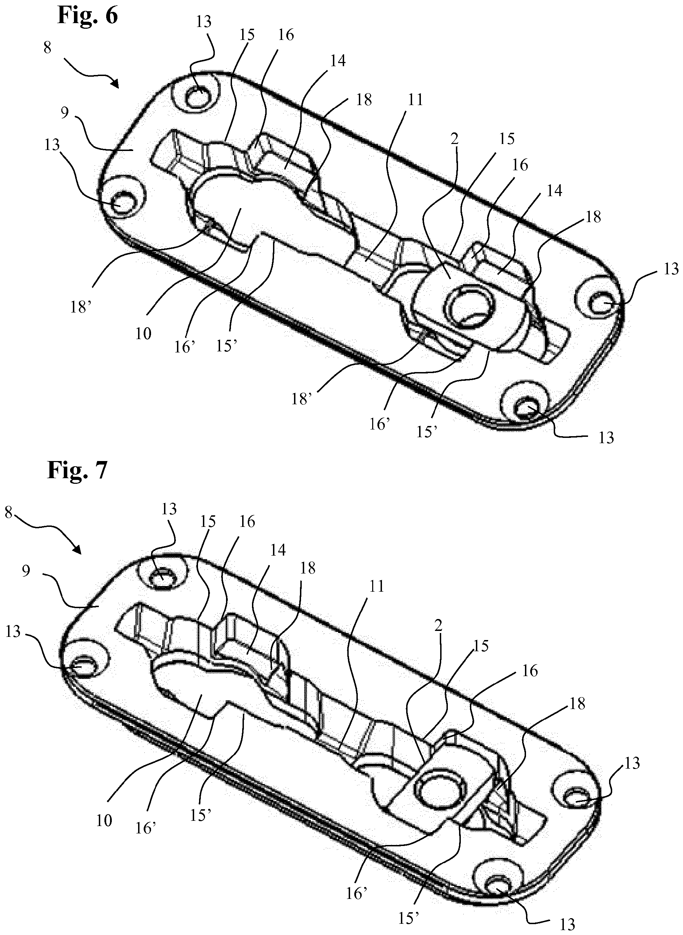

In Fig. 6 und 7 ist die Rückseite des unten offenen Profilelements 8 gezeigt. Die Öffnungen 10, 10' weisen dabei jeweils eine sich über beide Längsseiten der Öffnung 10, 10' erstreckende Hinterschneidung 14 auf. Die Hinterschneidung 14 weist dabei Begrenzungselemente 15, 15' sowie Anschlagelemente 16, 16' auf. Durch die Begrenzungselemente 15, 15' ist eine Drehung der Hammermutter 1 lediglich in eine Drehrichtung, in der in Fig. 6 und 7 dargestellten Ansicht entgegen dem Uhrzeigersinn, möglich. Bei einem Drehwinkel von 90° wird dabei die Drehung der Hammermutter 1 durch das Anliegen des Klemmkörpers 2 an den Anschlagelementen 16, 16' der Hinterschneidung 14 begrenzt. Die Hammermutter 1 befindet sich hierbei in der in Fig. 7 gezeigten Fixierungsposition, die für die Befestigung eines Bauteils vorgesehen ist. Die Hinterschneidung 14 weist außerdem Rastnasen 18, 18' auf, die ein Ausdrehen einer mit einem Bauteil verschraubten Hammermutter 1 aus der Fixierungsposition verhindert. Als Orientierungshilfe für die Ausrichtung der in das Profilelement 8 eingebrachten Hammermutter 1 weist das Profilelement 8 außerdem Einkerbungen 17, 17' auf, wie in Fig. 4 und 5 gezeigt ist.

Die Befestigung eines Bauteils an einem in einer Befestigungswand eingebrachten Profilelement 8 über eine Hammermutter 1 erfolgt dabei wie nachfolgend beschrieben. Zunächst wird dabei die Hammermutter 1 wie in Fig. 5 gezeigt in die Öffnung 10, 10' des Profilelements 8 eingebracht. Nachfolgend wird das zu befestigende Bauteil an der entsprechend vorgesehenen Stelle der Befestigungswand positioniert und ein zur Befestigung vorgesehenes Befestigungselement, speziell ein Gewindebolzen, in die mit dem Gewinde versehene Bohrung 4 des Profilelements 8 eingeführt. Durch die in den Figuren nicht gezeigte Hemmung des Gewindes der Hammermutter 1 wird das vollständige Einschrauben des Gewindebolzens zunächst gehemmt, wodurch eine Drehung der Hammermutter 1 über die Rastnase 18 hinweg in die Hinterschneidung 14 erfolgt. Bei einem Drehwinkel von 90°, bei dem sich die Hammermutter 1 in der in Fig. 7 gezeigten Fixierungsposition befindet, liegt der Klemmkörper 2 an den Anschlagelementen 16, 16' der Hinterschneidung 14 an und verhindert so ein Weiterdrehen der Hammermutter 1. Durch das weitere Einschrauben des Gewindebolzens wird die Hemmung des Gewindes überwunden und der Klemmkörper 2 gegen die Hinterschneidung 14 gedrückt. Das Bauteil wird dadurch an dem Profilelement 8 fixiert. Die Rastnase 18 verhindert dabei, dass die Hammermutter 1, beispielsweise durch eine auf das Bauteil einwirkende Kraft, aus Ihrer Fixierungsposition ausgebracht werden kann.

Beim Lösen eines an einem Profilelement 8 angebrachten Bauteils wird der Gewindebolzen aus dem Gewinde der Hammermutter 1 ausgeschraubt. Zum Ausbringen der Hammermutter 1 aus dem Profilelement 8 ist es erforderlich, dass die Hammermutter 1 gemäß der in Fig. 5 gezeigten Orientierung, wobei die Längsrichtung des Klemmkörpers 2 und die Längsrichtung der Öffnung 10, 10' parallel zueinander sind, ausgerichtet ist. Die Ausrichtung der Hammermutter 1 kann dabei insbesondere über einen Schlitzschraubendreher, der in die Einkerbungen 7, 7' der Schafteinheit 3 eingreift, erfolgen.

Das Profilelement 8 ermöglicht dabei sowohl die Verschraubung eines Bauteils über in die Öffnungen 10, 10' eingebrachte Hammermuttern 1 als auch das Anbringen eines Haltegurts an dem Steg 11 des Profilelements 8. Beispielsweise bei Fahrzeugböden, in die insbesondere mehrere der Profilelemente 8 eingebracht sind, ist eine flexible Verwendung des Profilelements 8 sowohl zur Verschraubung eines Bauteils, z.B. eines Regals, als auch ein Sichern der Ladung über einen an dem Steg 11 angebrachten Haltegurt möglich.

### Bezugszeichenliste

- 1: Hammermutter
- 2: Klemmkörper
- 3: Schafteinheit
- 4: Bohrung
- 5: Übergangsbereich
- 6, 6': Kreissegmente
- 7, 7': Einkerbung
- 8: Profilelement
- 9: Auflagebereich
- 10, 10': Öffnung
- 11: Steg
- 12, 12': Aussparung
- 13: Bohrungen
- 14: Hinterschneidung
- 15: Begrenzungselement
- 16, 16': Anschlagelement
- 17: Einkerbung
- 18: Rastnase
- l: Länge des Klemmkörpers
- b: Breite des Klemmkörpers
- h: Höhe des Klemmkörpers
- H: Höhe des oberen Abschnitts des Profilelements

## Patentansprüche

1. Hammermutter (1) umfassend einen Klemmkörper (2), eine auf dem Klemmkörper (2) angeordnete Schafteinheit (3) sowie eine mit einem Gewinde versehene Bohrung (4), die sich durch die Schafteinheit (3) und den Klemmkörper (2) erstreckt, **dadurch gekennzeichnet, dass** die Schafteinheit (3) als ein sich in Richtung des Klemmkörpers (2) verjüngender Konus ausgebildet ist.

2. Hammermutter nach Anspruch 1, **dadurch gekennzeichnet, dass** sie einstückig ausgebildet ist.

3. Hammermutter nach einem der voranstehenden Ansprüche, **dadurch gekennzeichnet, dass** der Klemmkörper (2) durch eine symmetrische Grundfläche G, gebildet aus zwei über zwei Kurvenabschnitte verbundene, parallel zueinander verlaufende Geraden, sowie einer Höhe h, gebildet ist.

4. Hammermutter nach Anspruch 3, **dadurch gekennzeichnet, dass** die Kurvenabschnitte Kreissegmente (6, 6') sind.

5. Hammermutter nach einem der voranstehenden Ansprüche, **dadurch gekennzeichnet, dass** die Schafteinheit (3) mittig auf dem Klemmkörper (2) angeordnet ist.

6. Hammermutter nach einem der voranstehenden Ansprüche, **gekennzeichnet durch** einen Übergangsabschnitt (5), der den Klemmkörper (2) und die Schafteinheit (3) verbindet.

7. Hammermutter nach Anspruch 6, **dadurch gekennzeichnet, dass** der Übergangsabschnitt (5) eine von der Schafteinheit (3) abweichende Außenfläche aufweist.

8. Hammermutter nach einem der voranstehenden Ansprüche, **dadurch gekennzeichnet, dass** das Gewinde eine Hemmung zur Bildung eines überwindbaren Widerstands beim Einschrauben eines Gewindebolzens aufweist.

9. Hammermutter nach Anspruch 8, **dadurch gekennzeichnet, dass** die Hemmung durch eine Störung mindestens eines Gewindegangs gegeben ist.

10. Hammermutter nach einem der voranstehenden Ansprüche, **dadurch gekennzeichnet, dass** die Schafteinheit (3) auf der dem Klemmkörper (2) abgewandten Seite mindestens eine Einkerbung (7, 7') aufweist.

11. Hammermutter nach einem der voranstehenden Ansprüche, **dadurch gekennzeichnet, dass** der Konus einen Öffnungswinkel im Bereich von 40° bis 60° aufweist.

12. Profilelement (8) zur Aufnahme einer nach einem der voranstehenden Ansprüche ausgebildeten Hammermutter (1), umfassend mindestens eine Öffnung, an die sich eine Hinterschneidung (14) anschließt, in die der Klemmkörper (2) der Hammermutter (1) einbringbar ist, wobei die Hinterschneidung (14) mindestens ein Anschlagelement (16, 16') aufweist, das die Drehung der eingebrachten Hammermutter (1) begrenzt, sowie eine Ausnehmung zur Aufnahme der Schafteinheit (3) der in die Öffnung (10, 10') eingebrachten Hammermutter (1).

13. Profilelement nach Anspruch 12, **dadurch gekennzeichnet, dass** die Ausnehmung die Schafteinheit (3) vollständig aufnimmt.

14. Profilelement nach einem der Ansprüche 12 oder 13, **gekennzeichnet durch** zwei durch einen Steg (11) voneinander getrennten Öffnungen (10, 10').
